# DEMANDE DE BREVET EUROPEEN

(11) **EP 1 071 239 A1**
(43) Date de publication de la demande: **24.01.2001**
(21) Numéro de dépôt: 00402050.9
(22) Date de dépôt: 19.07.2000
(51) Int. Cl.: H04L 1/18

(54) **Système de transmission de données avec demande de répétition automatique par voie radioélectrique**

(30) Priorité: 21.07.1999 FR 9909465
(71) Demandeur: Alstom, 75116 Paris (FR)
(72) Inventeur: Thibault, Xavier, 92160 Antony (FR)
(74) Mandataire: Gosse, Michel

(57) **Abrégé**

Ce système de transfert sécurisé de données entre au moins deux stations (1,2) reliées par un réseau (3) de transmission d'informations par voie radioélectrique, dont une station émettrice (1) des données sous la forme d'une trame comportant des informations de validation de celle-ci, et une station réceptrice des données (2) comportant des moyens (11) de vérification de la trame à partir des informations de validation correspondantes, est caractérisé en ce que la station réceptrice des données (2) comporte des moyens (12,13) d'émission d'un signal d'accusé de réception de trame valide (ACK) ou de trame invalide (NACK) selon le résultat de la vérification de la trame, à destination de la station émettrice des données (1) et en ce que la station émettrice des données (1) comporte des moyens (15) de déclenchement d'une nouvelle émission de la trame de données en cas de réception d'un signal d'accusé de réception de trame invalide (NACK) ou de non réception d'un signal d'accusé de réception au bout d'une période de temps prédéterminée (T1).

## Description

La présente invention concerne un système de transfert sécurisé de données entre au moins deux stations reliées par un réseau de transmission d'informations par voie radioélectrique.

De tels systèmes peuvent par exemple être utilisés pour assurer un échange d'informations entre des trains se déplaçant sur un réseau ferré et des postes fixes de contrôle de celui-ci en utilisant un réseau téléphonique.

On a déjà développé dans l'état de la technique, des systèmes de ce type qui permettent à une station émettrice des données, d'adresser celles-ci à destination d'une station réceptrice, sous la forme de trames successives, dont chacune comporte des informations de validation.

La station réceptrice des données comporte alors des moyens de vérification de chaque trame à partir des informations de validation correspondantes pour s'assurer de la cohérence de ces données.

Cependant, une telle structure présente un certain nombre d'inconvénients, car la liaison radioélectrique entre les stations peut être rompue, pour différentes raisons, interrompant ainsi la communication des données entre les deux stations et provoquant une perte systématique de ces données en cours de transmission.

Le but de l'invention est donc de résoudre ces problèmes.

A cet effet, l'invention a pour objet un système de transfert sécurisé de données entre au moins deux stations reliées par un réseau de transmission d'informations par voie radioélectrique, dont une station émettrice des données sous la forme d'une trame comportant des informations de validation, et une station réceptrice des données comportant des moyens de vérification de la trame à partir des informations de validation correspondantes, caractérisé en ce que la station réceptrice comporte des moyens d'émission d'un signal d'accusé de réception de trame valide ou de trame invalide selon le résultat de la vérification de la trame, à destination de la station émettrice des données et en ce que la station émettrice des données comporte des moyens de déclenchement d'une nouvelle émission de la trame de données en cas de réception d'un signal d'accusé de réception de trame invalide ou de non réception d'un signal d'accusé de réception au bout d'une période de temps prédéterminée.

L'invention sera mieux comprise à la lecture de la description qui va suivre, donnée uniquement à titre d'exemple et faite en se référant aux dessins annexés, sur lesquels :
- la Fig.1 illustre de façon générale, un système de transfert de données; et
- la Fig.2 illustre la sécurisation du transfert de ces données mise en oeuvre dans le système selon l'invention.

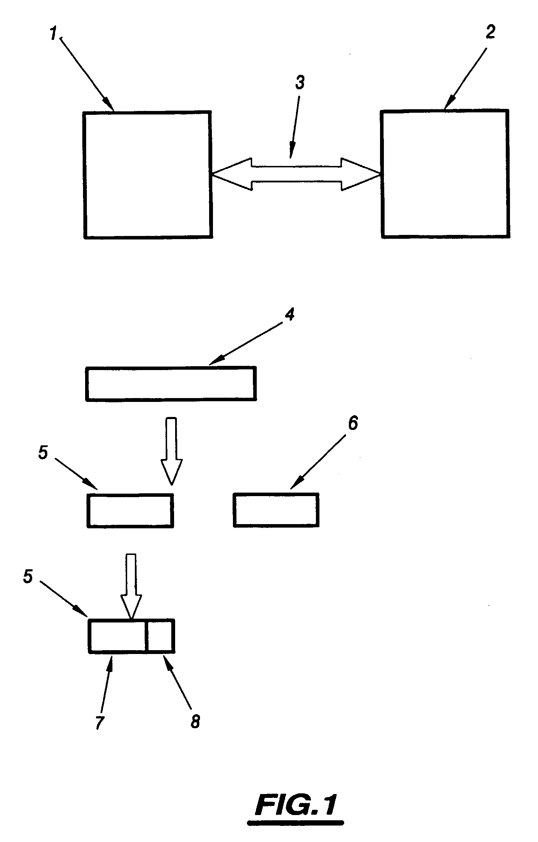

On a en effet représenté sur la figure 1, un système de transfert de données entre au moins deux stations désignées par les références générales 1 et 2 sur cette figure, reliées par un réseau de transmission d'informations par voie radioélectrique, désigné par la référence générale 3.

Ce réseau de transmission d'informations par voie radioélectrique peut par exemple être un réseau téléphonique permettant de raccorder une station embarquée par exemple dans un train circulant sur un réseau ferré à un poste fixe d'infrastructure de surveillance de celui-ci.

L'une de ces stations, par exemple la station 1, est une station émettrice des données qui permet de transférer par exemple un fichier désigné par la référence générale 4 à destination de l'autre station.

A cet effet, ce fichier 4 est décomposé en trames de données qui sont adaptées pour être émises successivement à destination de l'autre station.

Deux trames sont ainsi illustrées sur cette figure 1 et sont désignées par les références générales 5 et 6 sur cette figure.

Chaque trame comme par exemple la trame 5, comporte alors en outre une portion de données désignée par la référence générale 7 et des informations de validation de celle-ci désignées par la référence générale 8.

Ces informations de validation comprennent par exemple un numéro de trame, un mot de contrôle, etc.., de façon classique.

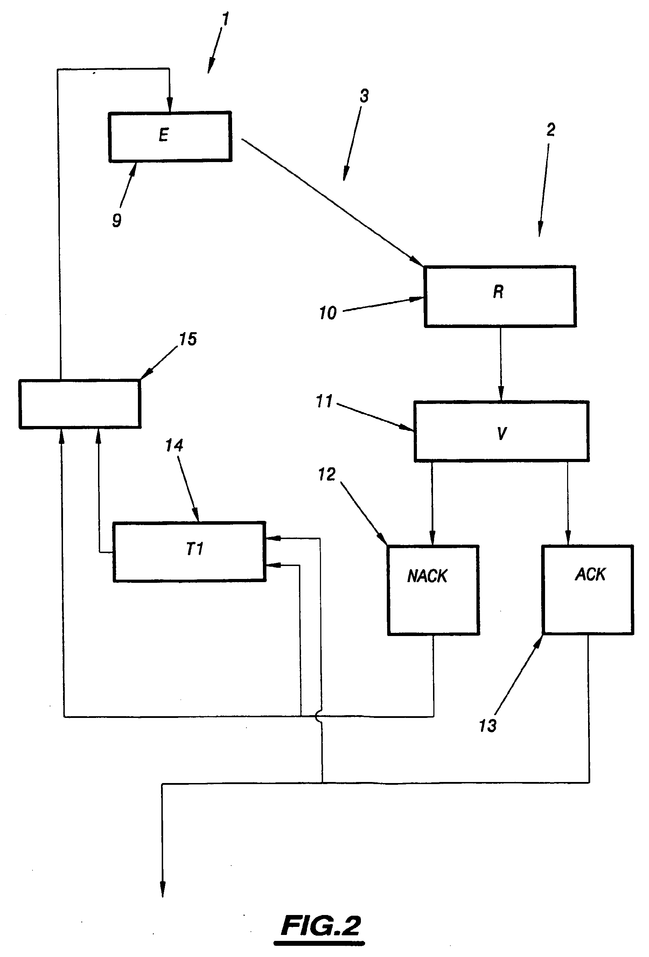

La station 1 émettrice des données comporte alors des moyens d'émission correspondants désignés par la référence générale 9 sur la figure 2, adaptés pour émettre une trame à destination de la station réceptrice correspondante 2 à travers le réseau de transmission d'informations 3, de façon classique.

Cette trame est alors reçue dans des moyens de réception correspondants 10 de la station 2, qui comporte également des moyens 11 de vérification de cette trame à partir des informations de validation correspondantes contenues dans cette trame, pour engendrer un signal d'accusé de réception de trame valide ACK ou de trame invalide NACK selon le résultat de cette vérification et l'émettre à destination de la station émettrice des données.

En effet, si la trame de données reçue est valide, ces moyens de vérification 11 engendrent un signal d'accusé de réception de trame valide ACK, tandis que si la trame reçue est erronée pour une raison ou pour une autre, ces moyens de vérification 11 engendrent un signal d'accusé de réception de trame invalide NACK.

Ces signaux sont désignés par les références 12 pour le signal de trame invalide et 13 pour le signal de trame valide sur cette figure.

Ce signal d'accusé de réception de trame valide ou de trame invalide est alors transmis par la station réceptrice des données en direction de la station émettrice de celles-ci.

Si la station émettrice des données reçoit un signal d'accusé de réception de trame valide ACK, elle peut alors poursuivre la transmission des autres trames.

Par contre, si elle reçoit un signal de trame invalide NACK, des moyens 15 de celle-ci déclenchent une nouvelle émission de la trame correspondante.

Ces signaux d'accusé de réception de trame valide et de trame invalide sont également utilisés pour arrêter le fonctionnement d'une horloge par exemple 14 de la station émettrice 1.

Cette horloge 14 est alors déclenchée lors de l'émission de la trame et est arrêtée lors de la réception d'un signal d'accusé de réception.

Dans le cas où aucun signal d'accusé de réception n'est reçu de la station réceptrice au bout d'une période de temps prédéterminée T1, cette horloge 14 déclenche alors le fonctionnement des moyens 15 pour provoquer une nouvelle émission de la trame de données.

En effet, la station émettrice des données considère que si elle n'a pas reçu d'accusé de réception au bout de cette période de temps prédéterminée T1, une erreur s'est produite lors de la transmission soit de la trame, soit du signal d'accusé de réception et qu'il convient donc de réémettre la trame correspondante.

De telles tentatives de réémission des trames peuvent être renouvelées un certain nombre de fois.

On conçoit alors qu'une telle structure présente un certain nombre d'avantages par rapport aux systèmes de l'état de la technique, dans la mesure où l'émission d'une trame de données impose la réception d'un accusé de réception, ce qui permet de s'assurer que toutes les trames ont bien été transmises et reçues.

## Revendications

1. Système de transfert sécurisé de données entre au moins deux stations (1,2) reliées par un réseau (3) de transmission d'informations par voie radioélectrique, dont une station émettrice (1) des données sous la forme d'une trame (5) comportant des informations (8) de validation, et une station réceptrice des données (2) comportant des moyens (11) de vérification de la trame à partir des informations de validation correspondantes, caractérisé en ce que la station réceptrice des données (2) comporte des moyens (12,13) d'émission d'un signal d'accusé de réception de trame valide (ACK) ou de trame invalide (NACK) selon le résultat de la vérification de la trame, à destination de la station émettrice des données (1) et en ce que la station émettrice des données (1) comporte des moyens (15) de déclenchement d'une nouvelle émission de la trame de données en cas de réception d'un signal d'accusé de réception de trame invalide (NACK) ou de non réception d'un signal d'accusé de réception au bout d'une période de temps prédéterminée (T1).

2. Système selon la revendication 1, caractérisé en ce que les moyens de déclenchement (15) sont pilotés par une horloge (14) dont le fonctionnement est déclenché lors de l'émission de la trame par la station émettrice (1) et est arrêtée lors de la réception du signal d'accusé de réception.

3. Système selon l'une quelconque des revendications précédentes, caractérisé en ce que le réseau de transmission d'informations (3) est un réseau téléphonique.
